# EUROPÄISCHE PATENTSCHRIFT

(11) **EP 1 024 168 B1**
(45) Veröffentlichungstag und Bekanntmachung des Hinweises auf die Patenterteilung: **23.04.2003**
(21) Anmeldenummer: 99125891.4
(22) Anmeldetag: 24.12.1999
(51) Int. Cl.: C08K 5/5313, C08K 3/32, C08K 3/34, C08K 5/19, C08K 5/3472, C08K 5/3477, C08K 5/521

(54) **Flammwidrige duroplastische Massen**
Flameretardant duroplastic masses
Masses duroplastiques ignifuges

(30) Priorität: 30.01.1999 DE 19903707
(43) Veröffentlichungstag der Anmeldung: 02.08.2000
(73) Patentinhaber: Clariant GmbH, 65929 Frankfurt am Main (DE)
(72) Erfinder: Hörold, Sebastian, Dr., 50374 Erftstadt (DE)

(56) Entgegenhaltungen:
- EP-A- 0 806 429
- DE-A- 19 614 424
- DE-A- 19 708 726

## Beschreibung

Die Erfindung betrifft flammwidrige duroplastische Massen, ein Verfahren zu ihrer Herstellung und ihre Verwendung.

Bauteile aus duroplastischen Harzen, insbesondere solche, die glasfaserverstärkt sind, zeichnen sich durch ihre guten mechanischen Eigenschaften, ihre geringe Dichte, weitgehende Chemikalienresistenz und ihre ausgezeichnete Oberflächenqualität aus. Dies und ihr günstiger Preis haben dazu geführt, daß sie in den Anwendungsbereichen Schienenfahrzeuge, Bauwesen und Luftfahrt zunehmend metallische Werkstoffe ersetzen.

Wegen ihrer Brennbarkeit benötigen ungesättigte Polyesterharze (UP-Harze), Epoxidharze (EP-Harze) und Polyurethane (PU-Harze) für einige Anwendungen Flammschutzmittel. Zunehmende Anforderungen des Marktes an den Brandschutz und an die Umweltfreundlichkeit von Produkten erhöhen das Interesse an halogenfreien Flammschutzmitteln wie z.B. Phosphorverbindungen oder Metallhydroxide.

Abhängig vom Anwendungsgebiet werden unterschiedliche Anforderungen hinsichtlich mechanischer, elektrischer und brandschutztechnischer Eigenschaften gestellt. Insbesondere im Bereich Schienenfahrzeuge wurden die Brandschutzanforderungen in letzer Zeit verschärft.

Es ist bekannt, ungesättigte Polyesterharze dadurch flammwidrig einzustellen, daß brom- oder chlorhaltige Säure- bzw. Alkoholkomponenten verwendet werden. Beispiele sind Hexachloroendomethylentetrahydrophtalsäure (HET-Säure), Tetrabromphtalsäure oder Dibromneopentylglycol. Als Synergist wird häufig Antimontrioxid verwendet.

In der JP 05245838 (CA 1993: 672700) werden zur Verbesserung der Flammwidrigkeit Aluminiumhydroxid, roter Phosphor und Antimontrioxid mit einem bromierten Harz kombiniert. Nachteilig an brom- oder chlorhaltigen Harzen ist, daß im Brandfall korrosive Gase entstehen, was zu erheblichen Schäden an elektronischen Bauteilen, beispielsweise an Relais in Schienenfahrzeugen, führen kann. Unter ungünstigen Bedingungen können auch polychlorierte bzw. bromierte Dibenzodioxine und Furane entstehen. Es besteht von daher ein Bedarf an halogenfreien flammwidrigen ungesättigten Polyesterharzen und -Formmassen.

Ungesättigte Polyesterharze und -Formmassen können bekannterweise mit Füllstoffen wie Aluminiumhydroxid ausgerüstet werden. Durch die Wasserabspaltung von Aluminiumhydroxid bei höheren Temperaturen wird eine gewisse Flammwidrigkeit erreicht. Bei Füllgraden von 150-200 Teilen Aluminiumhydroxid pro 100 Teilen UP-Harz können kann ein Selbstverlöschen und eine geringe Rauchgasdichte erreicht werden. Nachteilig bei derartigen Systemen ist das hohe spezifische Gewicht, das man beispielsweise durch den Zusatz von Hohlglaskugeln zu verringern sucht [Staufer, G., Sperl, M., Begemann, M., Buhl, D., Düll-Mühlbach, l., *Kunststoffe* 85 (1995), 4].

In der PL 159350 (CA 1995: 240054) werden Laminate aus ungesättigten Polyesterharzen mit bis zu 180 Teilen Magnesiumhydroxid beschrieben. Bedingt durch die hohe Viskosität des ungehärteten UP-Harzes mit dem Aluminiumhydroxid bzw. Magnesiumhydroxid kann mit derartigen Rezepturen allerdings nicht nach dem technisch äußerst wichtigen Injektionsverfahren gearbeitet werden.

Auqh die weiter unten beschriebenen Verfahren zur Einstellung einer Flammwidrigkeit bei ungesättigten Polyesterharzen weisen ebenfalls eine Reihe von Nachteilen, insbesondere einen sehr hohen Füllstoffgehalt auf.

Zur Verringerung des gesamten Füllstoffgehaltes kann Aluminiumhydroxid mit Ammoniumpolyphosphat, wie in der DE-A-37 28 629 beschrieben, kombiniert werden. Die Verwendung von rotem Phosphor als Flammschutzmittel für ungesättigte Polyesterharze ist in der JP 57016017 (CA96(22): 182248) und die Kombination von Aluminiumhydroxid, rotem Phosphor und Antimontrioxid in der JP 55094918 (CA93(24): 22152t) beschrieben.

Eine geringe Rauchgasdichte und Zersetzungsprodukte geringer Toxizität werden in der PL 161333 (CA 1994: 632278) durch die Verwendung von Aluminiumhydroxid, Magnesiumhydroxid oder basischem Magnesiumcarbonat, rotem Phosphor und gegebenenfalls hochdisperser Kieselsäure erreicht. Darüber hinaus wird die Verwendung von Melamin und Aluminiumhydroxid in der DE-A-2159757 beansprucht.

Da Aluminiumhydroxid allein kein sehr wirksames Flammschutzmittel für ungesättigte Polyesterharze und für Epoxidharze darstellt, werden zur Verringerung des Füllstoffanteils auch Kombinationen mit rotem Phosphor vorgeschlagen. Nachteilig dabei ist allerdings die rote Eigenfarbe des Produktes, was den Einsatz auf dunkel eingefärbte Bauteile beschränkt.

Ungesättigte Polyesterharze sind Lösungen von Polykondensationsprodukte aus gesättigten und ungesättigten Dicarbonsäuren oder deren Anhydriden mit Diolen in copolymerisierbaren Monomeren, vorzugsweise Styrol oder Methylmethacrylat. UP-Harze werden gehärtet durch radikalische Polymerisation mit Initiatoren (z.B. Peroxiden) und Beschleunigern. Die Doppelbindungen der Polyesterkette reagieren mit der Doppelbindung des copolymerisierbaren Lösungsmittelmonomers. Die wichtigsten Dicarbonsäuren zur Herstellung der Polyester sind Maleinsäureanhydrid, Fumarsäure und Terephtalsäure. Das am häufigsten verwendete Diol ist 1,2 Propandiol. Darüber hinaus werden auch Ethylenglycol, Diethylenglycol und Neopentylglycol u.a. verwendet. Das geeignetste Monomer zur Vernetzung ist Styrol. Styrol ist beliebig mit den Harzen mischbar und läßt sich gut copolymerisieren. Der Styrolgehalt in ungesättigten Polyesterharzen liegt normalerweise zwischen 25 und 40%. Anstelle von Styrol kann auch Methylmethacrylat als Monomeres verwendet werden.

Eine andere Gruppe von Duroplasten, die Epoxidharze, werden heute zur Herstellung von Formmassen und Beschichtungen mit hohen thermischen, mechanischen und elektronischen Eigenschaften eingesetzt.

Epoxidharze sind Verbindungen, die durch Polyadditionsreaktion von einer Epoxidharz-Komponente und einer Vernetzungs-(Härter) Komponente hergestellt werden. Als Epoxidharz Komponente werden aromatische Polyglycidylester wie Bisphenol-A-diglycidylester, Bisphenol-F-diglycidylester, Polyglycidylester von Phenol-Formaldehydharzen und Kresol-Formaldehydharzen, Polyglycidylester von Pththal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen verwendet.
Als Härter finden Polyamine wie Triethylentetramin, Aminoethylpiperazin und Isophorondiamin, Polyamidoamine, mehrbasige Säure oder deren Anhydride wie z.B. Phthalsäureanhydrid, Hexahydrophthalsäureanhydrid, Methyltetrahydrophthalsäureanhydrid oder Phenole Verwendung. Die Vernetzung kann auch durch Polymerisation unter Verwendung geeigneter Katalysatoren erfolgen.

Epoxidharze sind geeignet zum Verguß von elektrischen bzw. elektronischen Bauteilen und für Tränk- und Imprägnierprozesse. In der Elektrotechnik werden die verwendeten Epoxidharze überwiegend flammwidrig ausgerüstet und für Leiterplatten und Isolatoren eingesetzt.

Epoxidharze für Leiterplatten werden nach dem bisherigen Stand der Technik durch Einreagieren bromhaltiger aromatischen Verbindungen, insbesondere Tetrabrombisphenol A, flammwidrig eingestellt. Nachteilig ist, daß im Brandfall Bromwasserstoff (Gefahrstoff!) freigesetzt wird, was zu Schäden durch Korrosion führen kann. Unter ungünstigen Bedingungen können auch polybromierte Dibenzodioxine und Furane entstehen. Die Verwendung von Aluminiumhydroxid scheidet wegen der bei der Verarbeitung erfolgenden Wasserabspaltung vollständig aus.

Der Brandschutz elektrischer und elektronischer Ausrüstungen ist in Vorschriften und Normen zur Produktsicherheit festgelegt. In den USA werden brandschutztechnische Prüf- und Zulassungsverfahren von Underwriters Laboratories (UL) durchgeführt. Die UL Vorschriften werden heute weltweit akzeptiert. Die Brandprüfungen für Kunststoffe wurden entwickelt, um den Widerstand der Materialien gegenüber Entzündung und Flammenausbreitung zu ermitteln.

Je nach Brandschutzanforderungen müssen die Materialien horizontale Brenntests (Klasse UL 94 HB oder die strengeren vertikalen Tests (UL 94 V2, V1 oder V-0) bestehen. Diese Prüfungen simulieren Zündquellen geringer Energie, die in Elektrogeräten auftreten und auf Kunststoffteile elektrischer Baugruppen einwirken können.

Es wurde nun überraschenderweise gefunden, daß Salze von Phosphinsäuren in Kombination mit einer Reihe synergistisch wirkender Verbindungen sich als effektive Flammschutzmittel für duroplastische Harze wie ungesättigte Polyesterharze oder Epoxidharze erweisen.

Alkalisalze von Phosphinsäuren sind bereits als flammhemmende Zusätze für thermoplastische Polyester vorgeschlagen (DE-A-44 30 932). Sie müssen in Mengen bis zu 30 Gew.% zugesetzt werden. Weiterhin sind die Salze von Phosphinsäuren mit einem Alkalimetall oder einem Metall aus der zweiten oder dritten Hauptgruppe des Periodensystems zur Herstellung flammwidriger Polyamid-Formmassen eingesetzt worden, insbesondere die Zinksalze (DE-A-2 447 727). Im Brandverhalten unterscheiden sich thermoplastische Polyester wie PET und PBT und duroplastische Polyester wie ungesättigte Polyesterharze deutlich: Thermoplastische Materialien tropfen im Brandfall ab, duroplastische Materialien dagegen schmelzen nicht und tropfen auch nicht ab.

Im einzelnen betrifft die Erfindung flammwidrige duroplastische Massen, dadurch gekenzeichnet, daß sie als Flammschutzkomponente mindestens ein Phosphinsäuresalz der Formel (l) und/oder ein Diphosphinsäuresalz der Formel (II) und/oder deren Polymere enthält, 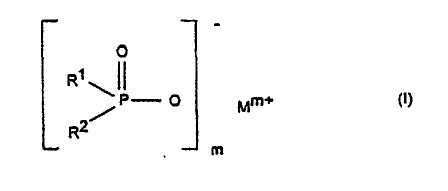 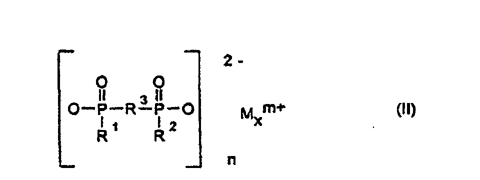 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Zn, Fe, Zr, Ce, Bi, Sr, Mn, Li, Na und/oder K ;
- m: 1 bis 4;
- n: 1 bis 4;
- x: 1 bis 4
bedeuten, sowie mindestens eine synergistisch wirkende Komponente aus der Substanzreihe Metallhydroxid, Stickstoffverbindung oder Phosphor-Stickstoff-Verbindung enthält.

Bevorzugt sind R¹, R² gleich oder verschieden und bedeuten C₁-C₆-Alkyl, linear oder verzweigt und/oder Phenyl.

Bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen.

Bevorzugt bedeutet R³ auch Phenylen oder Naphthylen.

Bevorzugt bedeutet R³ auch Methyl-phenylen, Ethyl-phenylen, tert.-Butylphenylen, Methyl-naphtthylen, Ethyl-naphthylen oder tert.-Butylnaphthylen.

Bevorzugt bedeutet R³ auch Phenyl-methylen, Phenyl-ethylen, Phenyl-propylen oder Phenyl-butylen.

Bevorzugt enthalten die erfindungsgemäßen flammwidrigen duroplastischen Massen 5 bis 30 Masseteile mindestens eines Phosphinsäuresalzes der Formel (l) und/oder ein Diphosphinsäuresalz der Formel (II) und/oder deren Polymere und 10 bis 100 Masseteile Metallhydroxid je 100 Masseteile duroplastische Masse.

Bevorzugt handelt es sich bei dem Metallhydroxid um Aluminiumhydroxid oder Magnesiumhydroxid.

Bevorzugt enthalten die erfindungsgemäßen flammwidrigen duroplastischen Massen 5 bis 30 Masseteile mindestens eines Phosphinsäuresalzes der Formel (l) und/oder ein Diphosphinsäuresalz der Formel (II) und/oder deren Polymere und 10 bis 100 Masseteile an Stickstoff-Verbindung je 100 Masseteile duroplastische Masse.

Bevorzugt handelt es sich bei der Stickstoff-Verbindung um Melamin, Melaminderivate der Cyanursäure, Melaminderivate der Isocyanursäure, Melaminsalze wie Melaminphosphat oder Melamindiphosphat, Dicyandiamid oder eine Guanidinverbindung wie Guanidincarbonat, Guanidinphosphat, Guanidinsulfat und/oder um Kondensationsprodukte von Ethylenharnstoff und Formaldehyd.

Bevorzugt enthalten die erfindungsgemäßen flammwidrigen duroplastischen Massen 5 bis 30 Masseteile mindestens eines Phosphinsäuresalzes der Formel (l) und/oder ein Diphosphinsäuresalz der Formel (II) und/oder deren Polymere und 5 bis 30 Masseteile an Phosphor-Stickstoff-Verbindung je 100 Masseteile duroplastische Masse.

Bevorzugt handelt es sich bei der Phosphor-Stickstoff-Verbindung um Ammoniumpolyphosphat.

Bevorzugt enthält das Ammoniumpolyphosphat 0,5 bis 20 Masse-% eines wasserunlöslichen, gegebenenfalls gehärteten Kunstharzes, welches die einzelnen Ammoniumpolyphosphatteilchen umhüllt.

Die Erfindung betrifft auch flammwidrige duroplastische Massen, dadurch gekennzeichnet, daß es sich hierbei um Formmassen, Beschichtungen oder Laminate aus duroplastischen Harzen handelt.

Bevorzugt handelt es sich bei den duroplastischen Harzen um ungesättigte Polyesterharze oder um Epoxidharze.

Die Erfindung betrifft ebenfalls ein Verfahren zur Herstellung von flammwidrigen duroplastischen Massen, dadurch gekennzeichnet, daß man ein duroplastisches Harz mit einer Flammschutzkomponente aus mindestens einem Phosphinsäuresalz der Formel (l) und/oder ein Diphosphinsäuresalz der Formel (II) und/oder deren Polymere mit mindestens einer synergistisch wirkenden Komponente aus der Substanzreihe Metallhydroxid, Stickstoffverbindung oder Phosphor-Stickstoff-Verbindung vermischt und die resultierende Mischung bei Drücken von 3 bis 10 bar und Temperaturen von 20 bis 80 °C naß preßt (Kaltpressung).

Die Erfindung betrifft auch ein Verfahren zur Herstellung von flammwidrigen duroplastischen Massen, dadurch gekennzeichnet, daß man ein duroplastisches Harz mit einer Flammschutzkomponente aus mindestens einem Phosphinsäuresalz der Formel (l) und/oder ein Diphosphinsäuresalz der Formel (II) und/oder deren Polymere mit mindestens einer synergistisch wirkenden Komponente aus der Substanzreihe Metallhydroxid, Stickstoffverbindung oder Phosphor-Stickstoff-Verbindung vermischt und die resultierende Mischung bei Drücken von 3 bis 10 bar und Temperaturen von 80 bis 150 °C naß preßt (Warm- oder Heißpressung).

Ein weiteres Verfahren zur Herstellung von flammwidrigen duroplastischen Massen gemäß der vorliegenden Erfindung ist dadurch gekennzeichnet, daß man ein duroplastisches Harz mit einer Flammschutzkomponente aus mindestens einem Phosphinsäuresalz der Formel (l) und/oder ein Diphosphinsäuresalz der Formel (II) und/oder deren Polymere mit mindestens einer synergistisch wirkenden Komponente aus der Substanzreihe Metallhydroxid, Stickstoffverbindung oder Phosphor-Stickstoff-Verbindung vermischt und aus der resultierenden Mischung bei Drücken von 50 bis 150 bar und Temperaturen von 140 bis 160 °C Kunstharzmatten fertigt.

Die Erfindung betrifft schließlich auch die Verwendung der erfindungsgemäß eingesetzten einer Flammschutzmittel-Komponente zur flammfesten Ausrüstung von duroplastischen Massen.
Bevorzugt handelt es sich bei den duroplastischen Massen um ungesätttigte Polyesterharze oder um Epoxidharze.

Bevorzugt handelt es sich bei den duroplastischen Massen um Formmassen, Beschichtungen oder Laminate.

Die Salze der Phosphinsäuren, wie sie gemäß der Erfindung eingesetzt werden, können nach bekannten Methoden hergestellt werden, die beispielsweise in der EP-A-0 699 708 näher beschrieben sind.

Wie in den nachstehenden Beispielen ausgeführt ist, hat sich gezeigt, daß Aluminiumhydroxid, Stickstoff-Flammschutzmittel, Phosphor-Stickstoffverbindungen wie Ammoniumpolyphosphat und Salze von Phosphinsäuren der allgemeinen Formel (I) bzw. (ii) für sich allein geprüft selbst in höheren Konzentrationen in duroplastischen Harzen wenig wirksam sind.

Überraschenderweise wurde nun gefunden, daß eine Kombination aus Phosphinsäuresalzen und Aluminiumhydroxid bzw. Phosphinsäuresalzen und Ammoniumpolyphosphat oder Stickstoff-Flammschutzmitteln geeignet sind, die für duroplastische Kunststoffe beste Brennbarkeitsklasse V-0 nach UL 94 Vertikaltest zu erreichen. In den Beispielen wurden folgende Verbindungen eingesetzt:
®Alpolit SUP 403 BMT (Vianova Resins GmbH, Wiesbaden), ungesättigtes Polyesterharz, ca. 57%ig in Styrol, Säurezahl max 30 mgKOH/g, vorbeschleunigt und schwach thixotrop eingestellt, niedrigviskos (Viskosität im Auslaufbecher 4 mm: 110 ± 10 s) und stark reduzierte Styrolemissionen.
®Palatal 340 S (DSM-BASF Structural Resins, Ludwigshafen) ungesättigtes Polyesterharz, ca. 49%ig in Styrol und Methylmethacrylat, Dichte 1,08 g/ml, Säurezahl 7 mgKOH/g, vorbeschleunigt, niedrigviskos (dynamische Viskosität ca. 50 mPa*s).
®Beckopox EP 140 (Vianova Resins GmbH, Wiebaden), niedrigmolekulares Kondensationsprodukt aus Bisphenol A und Epichlorhydrin mit einer Dichte von 1,16 g/ml und einem Epoxidäquivalent von 180-192
®Beckopox EH 625 (Vianova Resins GmbH, Wiebaden), modifiziertes aliphatisches Polyamin mit einem H-Aktiväquivalentgewicht von 73 und einer dynamischen Viskosität von ca. 1000 mPa*s
®Modar 835 S (Ashland Composite Polymers Ltd, Kidderminster, GB) modifiziertes Acrylatharz, gelöst in Styrol, Viskosität ca. 55 mPa*s bei 25°C
®Martinal ON 921 (Martinswerk GmbH, Bergheim) Aluminiumhydroxid mit niedrigem Viskositätsanstieg als flammhemmender Füllstoff für Kunstharze; die Teilchengröße beträgt > 60% < 45 µm
®Exolit AP 422 (Clariant GmbH, Frankfurt/Main) feinkörniges, in Wasser schwer lösliches Ammoniumpolyphosphat der Formel (NH₄PO₃)ₙ wobei n = ca. 700; die Teilchengröße beträgt > 99% < 45µm
Kobaltbeschleuniger NL 49P (Akzo Chemie GmbH, Düren) Kobaltoktoatlösung in Dibutylphtalat mit einem Kobaltgehalt von 1 Masse %
Kobaltbeschleuniger NL 63-10S (Akzo Chemie GmbH, Düren)
Butanox M 50 (Akzo Chemie GmbH, Düren) Methylethylketonperoxid, mit Dimethylphtalat phlegmatisiert, klare Flüssigkeit mit einem Aktiv-Sauerstoffgehalt von mind. 9 Masse %
Dibenzoylperoxid Lucidol BT 50 (Akzo Chemie GmbH, Düren)
DEPAL: Aluminiumsalz der Diethylphosphinsäure

### Herstellung der Prüfkörper

Das duroplastische Harz und die Flammschutzmittel-Komponenten sowie gegebenenfalls weitere Additive werden mit einer Dissolverscheibe homogen vermischt. Nach Zugabe des Härters wird nochmals homogenisiert.

Bei ungesättigten Polyesterharzen wird das Harz mit dem Kobaltbeschleuniger vermischt, die Flammschutzmittel-Komponenten zugesetzt und nach Homogenisieren die Härtung durch die Zugabe des Peroxides gestartet.

Bei Epoxidharzen werden die Flammschutzmittel-Komponenten der Epoxidharz-Komponente zugegeben und homogen vermischt. Anschließend wird der Amin- bzw. der Anhydridhärter dazugegeben.

In einer beheizten Presse werden auf einer ®Hostaphan Trennfolie und einem Stahlrahmen zwei Lagen Textilglas-Endlosmatte vom Flächengewicht 450 g/m² eingelegt. Anschließend wird etwa die Hälfte des Harz-Flammschutzmittel-Gemisches gleichmäßg verteilt. Nach Zugabe einer weiteren Glasmatte wird das restliche Harz-Flammschutzmittel-Gemisch verteilt, das Laminat mit einer Trennfolie abgedeckt und bei einer Temperatur von 50°C während einer Stunde bei einem Preßdruck von 10 bar eine Preßplatte von 4 mm Dicke hergestellt.

Die Prüfung des Brandverhaltens wurde nach der Vorschrift von Underwriters Laboratories "Test for Flammability of Plastics Materials - UL 94" in der Fassung vom 02.05.1975 an Prüfkörpern von 127 mm Länge, 12,7 mm Breite und verschiedener Dicke durchgeführt.

Der Sauerstoffindex wurde in einer modifizierten Apparatur in Anlehnung an ASTM_D 2863-74 bestimmt.

### 1. Ergebnisse mit ungesättigten Polyesterharzen

Tabelle 1 zeigt Vergleichsbeispiele mit alleiniger Verwendung von Aluminiumhydroxid, Melamin, Ammoniumpolyphosphat und DEPAL als Flammschutzmittel für ein ungesättigtes Polyesterharz (Viapal UP 403 BMT). Aus der Tabelle ist zu entnehmen, daß bei alleiniger Verwendung von Aluminiumhydroxid bis zu einer Konzentration von 175 Teilen /100 Teilen ungesättigtes Polyesterharz keine V-0 Einstufung zu ereichen ist.
Auch bei alleiniger Verwendung von Melamin oder Ammoniumpolyphosphat ist bis zu einer Konzentration von 75 Teile 100 Teile ungesättigtes Polyesterharz keine V-0 Einstufung zu erreichen.

**Tabelle1**

| (Vergleichsbeispiele): | | | | | |
|---|---|---|---|---|---|
| Brennverhalten von ungesättigtem Polyester Harz Laminaten nach UL 94, 30 Gew% Textilglas-Endlosmatte, Laminatdicke 1,5 mm, Harz Viapal UP 403 BMT, Härter Butanox M50, Beschleuniger NL 49 P | | | | | |
| Beispiel Nr. | Flammschutzmittel Teile/100 Teile Harz | Nachbrenndauer [s] nach 1. Beflammen | Nachbrenndauer [s] nach 2. Beflammen | UL 94 Klassifizierung | LOI |
| 1 | 125 ATH* | verbrannt | - | n.k. | 0,30 |
| 2 | 150 ATH | verbrannt | - | n.k. | 0,33 |
| 3 | 175 ATH | 5 s | 32 s | n.k. | 0,37 |
| 4 | 25 Exolit AP 422 | verbrannt | - | n.k. | 0,23 |
| 5 | 50 Exolit AP 422 | verbrannt | - | n.k. | 0,25 |
| 6 | 75 Exolit AP 422 | 2 s | verbrannt | n.k. | 0,26 |
| 7 | 25 Melamin | verbrannt | - | n.k. | 0,23 |
| 8 | 50 Melamin | verbrannt | - | n.k. | 0,25 |
| 9 | 75 Melamin | 8 s | verbrannt | n.k. | 0,33 |
| 10 | 25 DEPAL** | 5 s | 60-70 | n.k. | 0,33 |

| | | | | | |
|---|---|---|---|---|---|
| *ATH = Aluminiumtrihydrat (Martinal ON 921) | | | | | |
| ** DEPAL = Diethylphosphinsäure-Aluminiumsalz n.k. = nicht klassifizierbar nach UL 94 Vertikaltest | | | | | |

Die Tabelle 2 zeigt die erfindungsgemäße Kombination von DEPAL mit Aluminiumtrihydrat oder mit Ammoniumpolyphosphat im ungesättigten Polyesterharz Viapal UP 403 BMT. Hier ist bei Kombination von DEPAL mit Aluminiumtrihydrat durch Zusatz von insgesamt 120 Teilen fester Flammschutzmittel auf 100 Teile ungesättigtes Polyesterharz eine V-0 Einstufung bei einer Laminatdicke von 1,5 mm zu erreichen. Die Laminate können beliebig eingefärbt werden. Durch Kombination von Ammoniumpolyphosphat und DEPAL konnte bereits mit 40 Teilen Flammschutzmittel eine V-0 Einstufung erreicht werden. Bei Verwendung von Melamin als Synergist zu DEPAL werden 60 Teile Flammschutzmittel für eine V-0 Einstufung benötigt.

Aufgrund des geringen Füllstoffgehaltes können diese UP-Harz-Laminate im Injektionsverfahren hergestellt werden.

Anstelle von Melamincyanurat können auch andere organische Stickstoffverbindungen wie Melamin, Melaminphosphat, Guanidinphosphat oder Dicyandiamid verwendet werden.

**Tabelle 2**

| (Erfindung): | | | | | |
|---|---|---|---|---|---|
| Brennverhalten von ungesättigtem Polyester Harz Laminaten nach UL 94, 30 Gew% Textilglas-Endlosmatte, Laminatdicke 1,5 mm Harz Viapal UP 403 BMT, Härter Butanox M50, Beschleuniger NL 49 P | | | | | |
| Beispiel Nr. | Flammschutzmittel Teile/100 Teile Harz | Nachbrenndauer [s] nach 1. Beflammen | Nachbrenndauer [s] nach 2. Beflammen | UL 94 Klassifizierung | LOI |
| 11 | 20 ATH 20 DEPAL | 40-50 | - | n.k. | 0,27 |
| 12 | 50 ATH 20 DEPAL | 15 | 25 | V-1 | 0,34 |
| 13 | 100 ATH 20 DEPAL | < 1 | 3-5 | V-0 | 0,36 |
| 14 | 20 Exolit AP 422 20 DEPAL | 1 | 2-4 | V-0 | 0,35 |
| 15 | 20 Melamin 20 DEPAL | verbrannt | - | n.k. | 0,31 |
| 16 | 30 Melamin 30 DEPAL | < 1 | < 1 | V-0 | 0,35 |
| 17 | 50 Melamin 10 DEPAL | < 1 | < 1 | V-0 | 0,32 |

Die Tabelle 3 zeigt die Kombination von DEPAL mit Aluminiumtrihydrat im ungesättigten Polyesterharz Palatal 340S. Hier ist durch Zusatz von insgesamt 90 Teilen fester Flammschutzmittel auf 100 Teile ungesättigtes Polyesterharz eine V-0 Einstufung bei einer Laminatdicke von 1,5 mm zu erreichen. Die Laminate können beliebig eingefärbt werden.

Mit Aluminiumtrihydrat allein wird dagegen erst ab 180 Teile Flammschutzmittel die gleiche Brandklasse erreicht.

**Tabelle 3:**

| Brennverhalten von ungesättigten Polyester Harz Laminaten nach UL 94, 30 Gew% Textilglas-Endlosmatte, Laminatdicke 1,5 mm, Harz Palatal 340 S, Härter Butanox M 50, Beschleuniger NL 49 P | | | | | |
|---|---|---|---|---|---|
| Beispiel Nr. | Flammschutzmittel Teile/100 Teile Harz | Nachbrenndauer [s] nach 1. Beflammen | Nachbrenndauer [s] nach 2. Beflammen | UL 94 Klassifizierung | LOI |
| 18 (Vgl.) | 100 ATH | verbrannt | - | n.k. | 0,25 |
| 19 (Vgl.) | 180 ATH | < 1 s | < 1 s | V-0 | 0,52 |
| 20 (Vgl.) | 25 DEPAL | verbrannt | - | n.k. | 0,30 |
| 21 (Erf.) | 20 DEPAL 50 ATH | 2 s | verbrannt | n. k. | 0,34 |
| 22 (Erf.) | 30 DEPAL 60 ATH | < 1 s | 8 s | V-0 | 0,41 |

Die Tabelle 4 zeigt die Kombination von DEPAL mit Aluminiumtrihydrat im modifizierten Acrylatharz Modar 835S. Hier ist durch Zusatz von insgesamt 70 Teilen fester Flammschutzmittel auf 100 Teile Harz eine V-0 Einstufung bei einer Laminatdikke von 1,5 mm zu erreichen.
Mit Aluminiumtrihydrat allein wird dagegen erst ab 180 Teile Flammschutzmittel die gleiche Brandklasse erreicht.

**Tabelle 4:**

| Brennverhalten von Acrylat Laminaten nach UL 94, 30 Gew% Textilglas-Endlosmatte, Laminatdicke 1,5 mm Harz Modar 835 S, Härter Lucidol BT 50, Beschleuniger NL 63-10 P | | | | | |
|---|---|---|---|---|---|
| Beispiel Nr. | Flammschutzmittel Teile/100 Teile Harz | Nachbrenndauer [s] nach 1. Beflammen | Nachbrenndauer [s] nach 2. Beflammen | UL 94 Klassifizierung | LOI |
| 23 (Vgl.) | 100 ATH | verbrannt | - | n.k. | 0,25 |
| 24 (Vgl.) | 180 ATH | < 1 s | < 1 s | V-0 | 0,45 |
| 25 (Vgl.) | 25 DEPAL | verbrannt | - | n.k. | 0,37 |
| 26 (Erf.) | 20 DEPAL 50 ATH | 1 s | 6 s | V-0 | 0,42 |

### 2. Ergebnisse mit Epoxidharzen

Die Tabelle 5 zeigt Brandprüfungen mit einem Polyamin gehärteten Epoxidharz (Harz Beckopox EP 140, Härter Beckopox EH 625). Durch die Kombination von DEPAL mit Aluminiumtrihydrat ist durch Zusatz von insgesamt 60 Teilen fester Flammschutzmittel auf 100 Teile Epoxidharz eine V-0 Einstufung bei einer Laminatdicke von 1,5 mm zu erreichen. Mit Aluminiumtrihydrat allein wird dagegen UL 94 V-0 bis zu 150 Teilen Flammschutzmittel nicht erreicht.

**Tabelle 5:**

| Brennverhalten von Epoxidharz-Formkörpern nach UL 94, Materialstärke 1,6 mm Harz 100 teile Beckopox EP 140, Härter 39 Teile Beckopox EH 625 | | | | | |
|---|---|---|---|---|---|
| Beispiel Nr. | Flammschutzmittel Teile/100 Teile Harz | Nachbrenndauer [s] nach 1. Beflammen | Nachbrenndauer [s] nach 2. Beflammen | UL 94 Klassifizierung | LOI |
| 25 (Vgl.) | 50 ATH | verbrannt | - | n.k. | 0,23 |
| 26 (Vgl.) | 100 ATH | verbrannt | - | n.k. | 0,26 |
| 27 (Vgl.) | 150 ATH | verbrannt | - | n.k. | 0,30 |
| 28 (Vgl.) | 10 Exolit AP 422 | verbrannt | | n.k. | 0,25 |
| 29 (Vgl.) | 15 Exolit AP 422 | | verbrannt | n.k. | 0,26 |
| 30 (Vgl.) | 20 Exolit AP 422 | 1 s | 15 s | V-1 | 0,27 |
| 31 (Vgl.) | 10 DEPAL | 1 s | verbrannt | n. k. | 0,27 |
| 32 (Vgl.) | 20 DEPAL | 1 s | 16 s | V-1 | 0,32 |
| 33 (Erf.) | 10 DEPAL 50 ATH | < 1 s | 3 s | V-0 | 0,33 |

Die Tabelle 6 zeigt Brandprüfungen mit einem Carbonsäureanhydrid gehärteten Epoxidharz (Harz Beckopox EP 140, Härter Methyltetrahydrophthalsäureanhydrid). Durch die Kombination von DEPAL mit Aluminiumtrihydrat ist durch Zusatz von insgesamt 60 Teilen fester Flammschutzmittel auf 100 Teile Epoxidharz eine V-0 Einstufung bei einer Laminatdicke von 1,5 mm zu erreichen. Mit Aluminiumtrihydrat allein wird dagegen UL 94 V-0 bis zu 150 Teilen Flammschutzmittel nicht erreicht.

**Tabelle 6:**

| Brennverhalten von Epoxidharz-Formkörpern nach UL 94, Materialstärke 2.0 mm Harz 100 Teile Beckopox EP 140, Härter 89 Teile Methyltetrahydrophthalsäureanhydrid | | | | | |
|---|---|---|---|---|---|
| Beispiel Nr. | Flammschutzmittel Teile/100 Teile Harz | Nachbrenndauer [s] nach 1. Beflammen | Nachbrenndauer [s] nach 2. Beflammen | UL 94 Klassifizierung | LOI |
| 34 (Vgl.) | 50 ATH | verbrannt | - | n.k. | 0,23 |
| 35 (Vgl.) | 100 ATH | verbrannt | - | n.k. | 0,25 |
| 36 (Vgl.) | 150 ATH | verbrannt | - | n.k. | 0,28 |
| 37 (Vgl.) | 10 Exolit AP 422 | verbrannt | - | n.k. | 0,25 |
| 38 (Vgl.) | 15 Exolit AP 422 | verbrannt | - | n.k. | 0,26 |
| 39 (Vgl.) | 20 Exolit AP 422 | verbrannt | - | n. k. | 0,27 |
| 40 (Vgl.) | 10 DEPAL | 1 s | verbrannt | n. k. | 0,27 |
| 41 (Vgl.) | 25 DEPAL | 1 s | 16 s | V-1 | 0,32 |
| 42 (Erf.) | 10 DEPAL 50 ATH | < 1 s | 3 s | V-0 | 0,33 |

## Patentansprüche

1. Flammwidrige duroplastische Massen, **dadurch gekennzeichnet, daß** sie als Flammschutzkomponente mindestens ein Phosphinsäuresalz der Formel (I) und/oder ein Diphosphinsäuresalz der Formel (II) und/oder deren Polymere enthält, 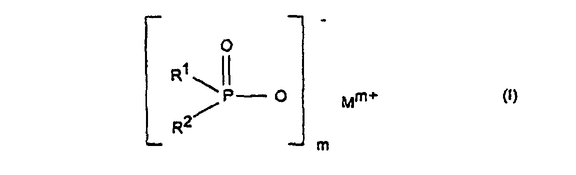 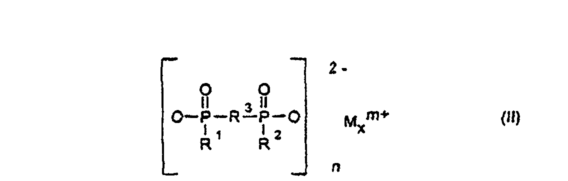 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Zn, Fe, Zr, Ce, Bi, Sr, Mn, Li, Na und/oder K ;
m 1 bis 4;
n 1 bis 4;
x 1 bis 4
bedeuten, sowie mindestens eine synergistisch wirkende Komponente aus der Substanzreihe Metallhydroxid, Stickstoffverbindung oder Phosphor-Stickstoff-Verbindung enthält.

2. Flammwidrige duroplastische Massen nach Anspruch 1, **dadurch gekennzeichnet, daß** R¹, R² gleich oder verschieden sind und C₁-C₆-Alkyl, linear oder verzweigt und/oder Phenyl bedeuten.

3. Flammwidrige duroplastische Massen nach Anspruch 1 oder 2, **dadurch gekennzeichnet, daß** R¹, R² gleich oder verschieden sind und Methyl, Ethyl, n-Propyl, iso-Propyl, n-Butyl, tert.-Butyl, n-Pentyl und/oder Phenyl bedeuten.

4. Flammwidrige duroplastische Massen nach einem oder mehreren der Ansprüche 1 bis 3, **dadurch gekennzeichnet, daß** R³ Methylen, Ethylen, n-Propylen, iso-Propylen, n-Butylen, tert.-Butylen, n-Pentylen, n-Octylen oder n-Dodecylen bedeutet.

5. Flammwidrige duroplastische Massen nach einem oder mehreren der Ansprüche 1 bis 3, **dadurch gekennzeichnet, daß** R³ Phenylen oder Naphthylen bedeutet.

6. Flammwidrige duroplastische Massen nach einem oder mehreren der Ansprüche 1 bis 3, **dadurch gekennzeichnet, daß** R³ Methyl-phenylen, Ethyl-phenylen, tert.-Butylphenylen, Methyl-naphtthylen, Ethyl-naphthylen oder tert.-Butylnaphthylen bedeutet.

7. Flammwidrige duroplastische Massen nach einem oder mehreren der Ansprüche 1 bis 3, **dadurch gekennzeichnet, daß** R³ Phenyl-methylen, Phenyl-ethylen, Phenyl-propylen oder Phenyl-butylen bedeutet.

8. Flammwidrige duroplastische Massen nach einem oder mehreren der Ansprüche 1 bis 7, **dadurch gekennzeichnet, daß** sie 5 bis 30 Masseteile Phosphinsäuresalz der Formel (I) und/oder ein Diphosphinsäuresalz der Formel (II) und/oder deren Polymere und 10 bis 100 Masseteile Metallhydroxid je 100 Masseteile duroplastische Masse enthalten.

9. Flammwidrige duroplastische Massen nach einem oder mehreren der Ansprüche 1 bis 8, **dadurch gekennzeichnet, daß** es sich bei dem Metallhydroxid um Aluminiumhydroxid oder Magnesiumhydroxid handelt.

10. Flammwidrige duroplastische Massen nach einem oder mehreren der Ansprüche 1 bis 7, **dadurch gekennzeichnet, daß** sie 5 bis 30 Masseteile Phosphinsäuresalz der Formel (I) und/oder ein Diphosphinsäuresalz der Formel (II) und/oder deren Polymere und 10 bis 100 Masseteile an Stickstoff-Verbindung je 100 Masseteile duroplastische Masse enthalten.

11. Flammwidrige duroplastische Massen nach einem oder mehreren der Ansprüche 1 bis 10, **dadurch gekennzeichnet, daß** es sich bei der Stickstoff-Verbindung um Melamin, Melaminderivate der Cyanursäure, Melaminderivate der Isocyanursäure, Melaminsalze wie Melaminphosphat oder Melamindiphosphat, Dicyandiamid oder eine Guanidinverbindung wie Guanidincarbonat, Guanidinphosphat, Guanidinsulfat und/oder um Kondensationsprodukte von Ethylenharnstoff und Formaldehyd handelt.

12. Flammwidrige duroplastische Massen nach einem oder mehreren der Ansprüche 1 bis 7, **dadurch gekennzeichnet, daß** sie 5 bis 30 Masseteile Phosphinsäuresalz der Formel (I) und/oder ein Diphosphinsäuresalz der Formel (II) und/oder deren Polymere und 5 bis 30 Masseteile an Phosphor-Stickstoff-Verbindung je 100 Masseteile duroplastische Masse enthalten.

13. Flammwidrige duroplastische Massen nach einem oder mehreren der Ansprüche 1 bis 12, **dadurch gekennzeichnet, daß** es sich bei der Phosphor-Stickstoff-Verbindung um Ammoniumpolyphosphat handelt.

14. Flammwidrige duroplastische Massen nach einem oder mehreren der Ansprüche 1 bis 13, **dadurch gekennzeichnet, daß** das Ammoniumpolyphosphat 0,5 bis 20 Masse-% eines wasserunlöslichen, gegebenenfalls gehärteten Kunstharzes, welches die einzelnen Ammoniumpolyphosphatteilchen umhüllt, enthält.

15. Flammwidrige duroplastische Massen nach einem oder mehreren der Ansprüche 1 bis 14, **dadurch gekennzeichnet, daß** es sich hierbei um Formmassen, Beschichtungen oder Laminate aus duroplastischen Harzen handelt.

16. Flammwidrige duroplastische Massen nach Anspruch 15, **dadurch gekennzeichnet, daß** es sich bei den duroplastischen Harzen um ungesättigte Polyesterharze oder um Epoxidharze handelt.

17. Verfahren zur Herstellung von flammwidrigen duroplastischen Massen nach einem oder mehreren der Ansprüche 1 bis 16, **dadurch gekennzeichnet, daß** man ein duroplastisches Harz mit einer Flammschutzkomponente aus Phosphinsäuresalz der Formel (I) und/oder ein Diphosphinsäuresalz der Formel (II) und/oder deren Polymere mit mindestens eine synergistisch wirkende Komponente aus der Substanzreihe Metallhydroxid, Stickstoffverbindung oder Phosphor-Stickstoff-Verbindung vermischt und die resultierende Mischung bei Drücken von 3 bis 10 bar und Temperaturen von 20 bis 60 °C naß preßt (Kaltpressung).

18. Verfahren zur Herstellung von flammwidrigen duroplastischen Massen nach einem oder mehreren der Ansprüche 1 bis 16, **dadurch gekennzeichnet, daß** man ein duroplastisches Harz mit einer Flammschutzkomponente aus Phosphinsäuresalz der Formel (I) und/oder ein Diphosphinsäuresalz der Formel (II) und/oder deren Polymere mit mindestens eine synergistisch wirkende Komponente aus der Substanzreihe Metallhydroxid, Stickstoffverbindung oder Phosphor-Stickstoff-Verbindung vermischt und die resultierende Mischung bei Drücken von 3 bis 10 bar und Temperaturen von 80 bis 150 °C naß preßt (Warm- oder Heißpressung).

19. Verfahren zur Herstellung von flammwidrigen duroplastischen Massen nach einem oder mehreren der Ansprüche 1 bis 16, **dadurch gekennzeichnet, daß** man ein duroplastisches Harz mit einer Flammschutzkomponente aus Phosphinsäuresalz der Formel (I) und/oder ein Diphosphinsäuresalz der Formel (II) und/oder deren Polymere mit mindestens eine synergistisch wirkende Komponente aus der Substanzreihe Metallhydroxid, Stickstoffverbindung oder Phosphor-Stickstoff-Verbindung vermischt und aus der resultierenden Mischung bei Drücken von 50 bis 150 bar und Temperaturen von 140 bis 160 °C Kunstharzmatten fertigt.

20. Verwendung einer Flammschutzmittel-Kombination gemäß mindestens einem der Ansprüche 1 bis 15 zur flammfesten Ausrüstung von duroplastischen Massen.

21. Verwendung nach Anspruch 20, **dadurch gekennzeichnet, daß** das es sich bei den duroplastischen Massen um ungesättigte Polyesterharze oder um Epoxidharze handelt.

22. Verwendung nach Anspruch 20 oder 21, **dadurch gekennzeichnet, daß** das es sich bei den duroplastischen Massen um Formmassen, Beschichtungen oder Laminate handelt.

## Claims

1. A flame-retardant thermoset composition which comprises, as flame retardant, at least one phosphinic salt of the formula (I) and/or a diphosphinic salt of the formula (II) and/or polymers of these 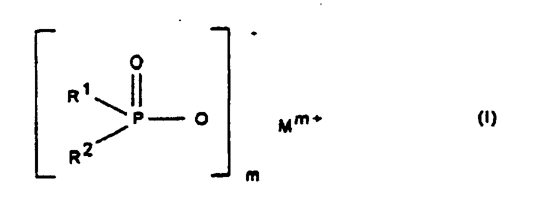 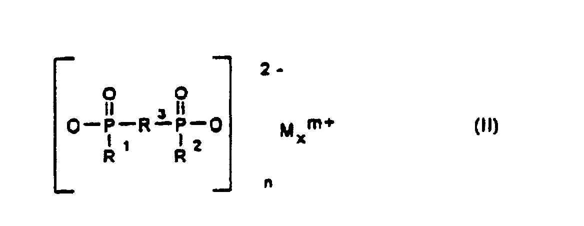 where
R¹, R² are identical or different and are C₁-C₆-alkyl, linear or branched, and/or aryl;
R³ is C₁-C₁₀-alkylene, linear or branched, C₆-C₁₀-arylene, -alkylarylene or -arylalkylene;
M is Mg, Ca, Al, Sb, Sn, Ge, Ti, Zn, Fe, Zr, Ce, Bi, Sr, Mn, Li, Na and/or K;
m is from 1 to 4;
n is from 1 to 4; and
x is from 1 to 4,
and also comprises at least one synergistic component selected from the group of substances consisting of metal hydroxide, nitrogen compounds and phosphorus-nitrogen compounds.

2. A flame-retardant thermoset composition as claimed in claim 1, wherein R¹ and R² are identical or different and are C₁-C₆-alkyl, linear or branched, and/or phenyl.

3. A flame-retardant thermoset composition as claimed in claim 1 or 2, wherein R¹ and R² are identical or different and are methyl, ethyl, n-propyl, isopropyl, n-butyl, tert-butyl, n-pentyl and/or phenyl.

4. A flame-retardant thermoset composition as claimed in one or more of claims 1 to 3, wherein R³ is methylene, ethylene, n-propylene, isopropylene, n-butylene, tert-butylene, n-pentylene, n-octylene or n-dodecylene.

5. A flame-retardant thermoset composition as claimed in one or more of claims 1 to 3, wherein R³ is phenylene or naphthylene.

6. A flame-retardant thermoset composition as claimed in one or more of claims 1 to 3, wherein R³ is methylphenylene, ethylphenylene, tert-butylphenylene, methylnaphthylene, ethylnaphthylene or tert-butylnaphthylene.

7. A flame-retardant thermoset composition as claimed in one or more of claims 1 to 3, wherein R³ is phenylmethylene, phenylethylene, phenylpropylene or phenylbutylene.

8. A flame-retardant thermoset composition as claimed in one or more of claims 1 to 7, which comprises from 5 to 30 parts by weight of phosphinic salt of the formula (I) and/or a diphosphinic salt of the formula (II) and/or polymers of these, and from 10 to 100 parts by weight of metal hydroxide, per 100 parts by weight of thermoset composition.

9. A flame-retardant thermoset composition as claimed in one or more of claims 1 to 8, wherein the metal hydroxide is aluminum hydroxide or magnesium hydroxide.

10. A flame-retardant thermoset composition as claimed in one or more of claims 1 to 7, which comprises from 5 to 30 parts by weight of phosphinic salt of the formula (I) and/or a diphosphinic salt of the formula (II) and/or polymers of these, and from 10 to 100 parts by weight of nitrogen compound, per 100 parts by weight of thermoset composition.

11. A flame-retardant thermoset composition as claimed in one or more of claims 1 to 10, wherein the nitrogen compound is melamine, a melamine derivative of cyanuric acid, a melamine derivative of isocyanuric acid, a melamine salt, such as melamine phosphate or melamine diphosphate, dicyandiamide or a guanidine compound, such as guanidine carbonate, guanidine phosphate or guanidine sulfate, and/or is a condensation product of ethyleneurea and formaldehyde.

12. A flame-retardant thermoset composition as claimed in one or more of claims 1 to 7, which comprises from 5 to 30 parts by weight of phosphinic salt of the formula (I) and/or a diphosphinic salt of the formula (II) and/or polymers of these, and from 5 to 30 parts by weight of phosphorus-nitrogen compound, per 100 parts by weight of thermoset composition.

13. A flame-retardant thermoset composition as claimed in one or more of claims 1 to 12, wherein the phosphorus-nitrogen compound is ammonium polyphosphate.

14. A flame-retardant thermoset composition as claimed in one or more of claims 1 to 13, wherein the ammonium polyphosphate comprises from 0.5 to 20% by weight of a water-insoluble synthetic resin which may have been cured and which encapsulates the individual ammonium polyphosphate particles.

15. A flame-retardant thermoset composition as claimed in one or more of claims 1 to 14, which is a molding composition, a coating or a laminate made from thermoset resins.

16. A flame-retardant thermoset composition as claimed in claim 15, wherein the thermoset resins are unsaturated polyester resins or epoxy resins.

17. A process for preparing flame-retardant thermoset compositions as claimed in one or more of claims 1 to 16, which comprises mixing a thermoset resin with a flame retardant made from phosphinic salt of the formula (I) and/or a diphosphinic salt of the formula (II) and/or polymers of these with at least one synergistic component selected from the group of substances consisting of metal hydroxides, nitrogen compounds and phosphorus-nitrogen compounds, and wet-pressing (cold-pressing) the resultant mixture at pressures of from 3 to 10 bar and at temperatures of from 20 to 60°C.

18. The process for preparing flame-retardant thermoset compositions as claimed in one or more of claims 1 to 16, which comprises mixing a thermoset resin with a flame retardant made from phosphinic salt of the formula (I) and/or a diphosphinic salt of the formula (II) and/or polymers of these with at least one synergistic component selected from the group of substances consisting of metal hydroxides, nitrogen compounds and phosphorus-nitrogen compounds, and wet-pressing (warm- or hot-pressing) the resultant mixture at pressures of from 3 to 10 bar and at temperatures of from 80 to 150°C.

19. The process for preparing flame-retardant thermoset compositions as claimed in one or more of claims 1 to 16, which comprises mixing a thermoset resin with a flame retardant made from phosphinic salt of the formula (I) and/or a diphosphinic salt of the formula (II) and/or polymers of these with at least one synergistic component selected from the group of substances consisting of metal hydroxides, nitrogen compounds and phosphorus-nitrogen compounds, and processing the resultant mixture at pressures of from 50 to 150 bar and at temperatures of from 140 to 160°C to give prepregs.

20. The use of a flame-retardant combination as claimed in at least one of claims 1 to 15 for rendering thermoset compositions flame-retardant.

21. The use as claimed in claim 20, wherein the thermoset compositions are unsaturated polyester resins or are epoxy resins.

22. The use as claimed in claim 20 or 21, wherein the thermoset compositions are molding compositions, coatings or laminates.

## Revendications

1. Matières thermodurcissables résistantes au feu, **caractérisées en ce qu'**elles renferment en tant que composant ignifugeant au moins un sel d'acide phosphinique de formule (I) et/ou un sel d'acide diphosphinique de formule (II) et/ou leurs polymères, 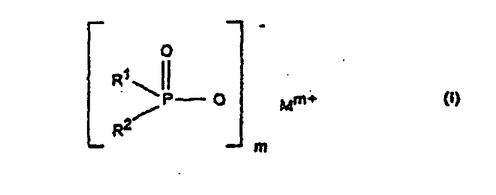 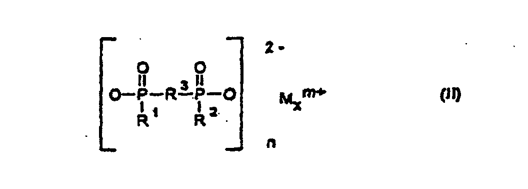 où
R¹, R² sont identiques ou différents et représentent un groupe alkyle en C₁-C₆ linéaire ou ramifié et/ou aryle ;
R³ représente un groupe alkylène en C₁-C₁₀ linéaire ou ramifié, un groupe alkylarylène, arylalkylène ou arylène en C₆-C₁₀ ;
M représente Mg, Ca, Al, Sb, Sn, Ge, Ti, Zn, Fe, Zr, Ce, Bi, Sr, Mn, Li, Na et/ou K ;
m va de 1 à 4 ;
n va de 1 à 4 ;
x va de 1 à 4 ;
ainsi qu'au moins un composé à effet synergique pris dans la gamme des substances hydroxyde métallique, composé azoté ou composé azoté-phosphoré.

2. Matières thermodurcissables résistantes au feu selon la revendication 1, **caractérisées en ce que** R¹, R² sont identiques ou différents et représentent un groupe alkyle en C₁-C₆ linéaire ou ramifié et/ou phényle.

3. Matières thermodurcissables résistantes au feu selon la revendication 1 ou 2, **caractérisées en ce que** R¹, R² sont identiques ou différents et représentent un groupe méthyle, éthyle, n-propyle, iso-propyle, n-butyle, tert.-butyle, n-pentyle et/ou phényle.

4. Matières thermodurcissables résistantes au feu selon une ou plusieurs des revendications 1 à 3, **caractérisées en ce que** R³ représente un groupe méthylène, éthylène, n-propylène, iso-propylène, n-butylène, tert.-butylène, n-pentylène, n-octylène ou n-dodécylène.

5. Matières thermodurcissables résistantes au feu selon une ou plusieurs des revendications 1 à 3, **caractérisées en ce que** R³ représente un groupe phénylène ou naphtylène.

6. Matières thermodurcissables résistantes au feu selon une ou plusieurs des revendications 1 à 3, **caractérisées en ce que** R³ représente des groupes méthyl-phénylène, éthyl-phénylène, tert.-butyl-phénylène, méthyl-naphtylène, éthyl-naphtylène ou tert.-butyl-naphtylène.

7. Matières thermodurcissables résistantes au feu selon une ou plusieurs des revendications 1 à 3, **caractérisées en ce que** R³ représente des groupes phényl-méthylène, phényl-éthylène, phényl-propylène ou phényl-butylène.

8. Matières thermodurcissables résistantes au feu selon une ou plusieurs des revendications 1 à 7, **caractérisées en ce qu'**elles présentent une teneur de 5 à 30 parties en masse en sel d'acide phosphinique de formule (I) et/ou un sel d'acide diphosphinque de formule (II) et/ou leurs polymères et de 10 à 100 parties en masse d'hydroxyde métallique par 100 parties en masse de matière thermodurcissable.

9. Matières thermodurcissables résistantes au feu selon une ou plusieurs des revendications 1 à 8, **caractérisées en ce qu'**il s'agit pour l'hydroxyde métallique d'hydroxyde d'aluminium ou d'hydroxyde de magnésium.

10. Matières thermodurcissables résistantes au feu selon une ou plusieurs des revendications 1 à 7, **caractérisées en ce qu'**elles présentent une teneur de 5 à 30 parties en masse en sel d'acide phosphinique de formule (I) et/ou un sel d'acide disphoshinique de formule (II) et/ou leurs polymères et de 10 à 100 parties en masse de composé azoté par 100 parties en masse de matière thermodurcissable.

11. Matières thermodurcissables résistantes au feu selon une ou plusieurs des revendications 1 à 10, **caractérisées en ce qu'**il s'agit pour le composé azoté de mélamine, de dérivés mélaminés de l'acide cyanurique, de dérivés mélaminés de l'acide isocyanurique, de sels de mélamine comme le phosphate de mélamine ou le diphosphate de mélamine, de dicyanodiamide ou d'un composé de guanidine comme le carbonate de guanidine, le phosphate de guanidine, le sulfate de guanidine et/ou de produits de condensation d'éthylène-urée et de formaldéhyde.

12. Matières thermodurcissables résistantes au feu selon une ou plusieurs des revendications 1 à 7, **caractérisées en ce qu'**elles présentent une teneur de 5 à 30 parties en masse en sel d'acide phosphinique de formule (I) et/ou un sel d'acide disphoshinique de formule (II) et/ou leurs polymères et de 5 à 30 parties en masse de composé azoté-phosphoré par 100 parties en masse de matière thermodurcissable.

13. Matières thermodurcissables résistantes au feu selon une ou plusieurs des revendications 1 à 12, **caractérisées en ce qu'**il s'agit pour le composé azoté-phosphoré de polyphosphate d'ammonium.

14. Matières thermodurcissables résistantes au feu selon une ou plusieurs des revendications 1 à 13, **caractérisées en ce que** le polyphosphate d'ammonium présente de 0,5 à 20 % en masse d'une résine synthétique insoluble dans l'eau, éventuellement durcie, qui enrobe les particules individuelles de polyphosphate d'ammonium.

15. Matières thermodurcissables résistantes au feu selon une ou plusieurs des revendications 1 à 14, **caractérisées en ce qu'**il s'agit, dans ce contexte, de matières à mouler, de revêtements ou de stratifiés de résines thermodurcissables.

16. Matières thermodurcissables résistantes au feu selon la revendication 15, **caractérisées en ce qu'**il s'agit pour les résines thermodurcissables de résines polyesters insaturées ou de résines époxydes.

17. Procédé pour la fabrication de résistantes thermodurcissables résistantes au feu selon une ou plusieurs revendications 1 à 16, **caractérisé en ce qu'**on mélange une résine thermodurcissable avec un composant ignifugeant à partir de sel d'acide phosphinique de formule (I) et/ou un sel d'acide diphosphinique de formule (II) et/ou leurs polymères avec au moins un compasant à effet synergique pris dans la gamme des substances hydroxyde métallique, composé azoté ou composé azoté-phosphoré et on effectue un moulage en phase humide (durcissement à froid) le mélange résultant sous une pression de 3 à 10 bars et à une température de 20 à 60°C.

18. Procédé pour la fabrication de matières thermodurcissables résistantes au feu selon une ou plusieurs revendications 1 à 16, **caractérisé en ce qu'**on mélange une résine thermodurcissable avec un composant ignifugeant à partir de sel d'acide phosphinique de formule (I) et/ou un sel d'acide diphosphinique de formule (II) et/ou leurs polymères avec au moins un composant à effet synergique pris dans la gamme des substances hydroxyde métallique, composé azoté ou composé azoté-phosphoré et on effectue un moulage en phase humide (durcissement à froid ou pressage à chaud) du mélange résultant sous une pression de 3 à 10 bars et à une température de 80 à 150°C un mat de résine synthétique.

19. Procédé pour la fabrication de matières thermodurcissables résistantes au feu selon une ou plusieurs revendications 1 à 16, **caractérisé en ce qu'**on mélange une résine thermodurcissable avec un composant ignifugeant à partir de sel d'acide phosphinique de formule (I) et/ou un sel d'acide diphosphinique de formule (II) et/ou leurs polymères avec au moins un composant à effet synergique pris dans la gamme des substances hydroxyde métallique, composé azoté ou composé azoté-phosphoré et on fabrique un préimprégné à partir du mélange résultant sous une pression de 50 à 150 bars et à une température de 140 à 160°C.

20. Utilisation d'une combinaison d'agent ignifugeant selon au moins l'une des revendications 1 à 15 pour l'imprégnation ignifuge de matières thermodurcissables.

21. Utilisation selon la revendication 20, **caractérisée en ce qu'**il s'agit, pour les matières thermodurcissables, de résines polyesters insaturées ou de résines époxydes.

22. Utilisation selon la revendication 20 ou 21, **caractérisée en ce qu'**il s'agit, pour les matières thermodurcissables, de matières à mouler, de revêtement ou de stratifiés.
